# EUROPEAN PATENT SPECIFICATION

(11) **EP 0 448 312 B1**
(45) Date of publication and mention of the grant of the patent: **08.05.1996**
(21) Application number: 91302273.7
(22) Date of filing: 18.03.1991
(51) Int. Cl.: H04N 1/32

(54) **Shared facsimile-telephone communication device**
Geteiltes Faksimile-Telefon-Kommunikationsgerät
Dispositif de communication fac-similé-téléphone partagé

(30) Priority: 20.03.1990 JP 70071/90
(43) Date of publication of application: 25.09.1991
(73) Proprietor: MATSUSHITA GRAPHIC COMMUNICATION SYSTEMS, INC., Meguro-ku Tokyo-to 153 (JP)
(72) Inventor: Matsunaga, Shigeo, Yokohama-shi, Kanagawa 240 (JP)
(74) Representative: Skone James, Robert Edmund

(56) References cited:
- GB-A- 2 213 681
- US-A- 4 868 865
- US-A- 4 985 764
- PATTERN RECOGNITION LETTERS, vol.5, no.4, April 1987, pages 289-292; A.ROSENFELD et al.: "Direction-weighted line fitting to edge data"

## Description

### BACKGROUND OF THE INVENTION

### 1. Field of the Invention

The present invention relates to a facsimile device in which both facsimile transmission and telephone transmission are possible and which enables switching therebetween and sharing facsimile-telephone communication functions.

### 2. Description of the Related Art

Facsimile devices are occasionally used in a manual reception mode where a telephone set is provided on an office desk apart from the facsimile unit itself.

When a call is received in a manual reception mode, first the telephone receiver is lifted off-hook to determine whether the call is a voice call or a facsimile transmission. In this case, when it is confirmed that an incoming signal is a voice call, a conversation is carried on normally, while when the incoming signal is a facsimile transmission, a remote reception function of the facsimile device begins to operate.

In the facsimile unit, when the push-button dial signal sent from the telephone set is detected, a communication line is switched over to the facsimile communication mode, and receipt of the facsimile transmission is started.

During facsimile communication, whenever the facsimile device receives the above communication signal, it is necessary for someone to lift the receiver and activate the facsimile device, it can be troublesome and annoying.

When a person who is not familiar with the operation of the facsimile device, or is not aware of the push-button dialing operation, lifts the telephone receiver, since that person will not be able to forward the facsimile transmission to the facsimile device, the call will be wasted resulting in unnecessary expense and a possible missed transmission.

US-A-4868865 describes a shared facsimile-telephone communication device in which a communication line is connected to a common pole of a switch which is normally connected to a controller. The other poles of the switch are connected to a telephone and a facsimile machine. This device enables a telephone and a facsimile machine to use a common communication line but does not enable a facsimile machine to be used if the telephone receiver is off-hook.

In accordance with one aspect of the present invention, a facsimile device for coupling to a communication line and a telephone set comprises facsimile communication means for effecting facsimile communication through the communication line; line switching means for selecting between a facsimile communication mode and a manual reception telephone mode and for switching connection of the communication line in the facsimile communication mode to said facsimile communication means and in the manual reception telephone mode to the telephone set connected externally to said line switching means; switching command generator means for generating a control command for switching said line switching means to the facsimile communication mode from the manual reception telephone mode when a signal indicating that a call is directed to said facsimile communication means is received from the communication line; and switching control means for controlling said line switching means when the control command is issued to connect the communication line to said facsimile communication means, both facsimile communication and telephone communication being effected on the communication line by switching between the facsimile communication mode and the manual reception telephone mode.

In accordance with a second aspect of the present invention, a method for switching between a manual telephone communication mode and a facsimile communication mode comprises the steps of:
(a) switching a switching unit to couple a communication line to a telephone set and a signal detection unit in the manual telephone communication mode;
(b) detecting a signal received from said communication line via said switching unit, indicating a facsimile communication mode, using the signal detection unit; and,
(c) switching the switching unit to decouple the telephone set and the signal detection unit from the communication line and to couple the facsimile device to the communication line in the facsimile communication mode, based on said step (b), regardless of whether the telephone set is in an off-hook state.

Some examples of facsimile devices and methods according to the invention and a conventional device will now be described with reference to the accompanying drawings, in which:-
Figure 1 is a diagram showing the arrangement of a conventional facsimile device;
Fig. 2 is a block diagram showing the constitution of the device according to the present invention;
Fig. 3 is a block diagram showing an embodiment of the device in accordance with the present invention;
Fig. 4 is a flow chart for explaining the function of an embodiment of the present invention during call waiting or when a call terminates;
Fig. 5 is a flow chart for explaining the function of an embodiment of the present invention during facsimile communication;
Fig. 6 is a block diagram showing an embodiment of the present invention; and
Fig. 7 is a block diagram showing a detailed explanation of a CNG detection unit illustrated in Fig. 6.

A comparison between a conventional device and the present invention will now be made with reference to the attached drawings.

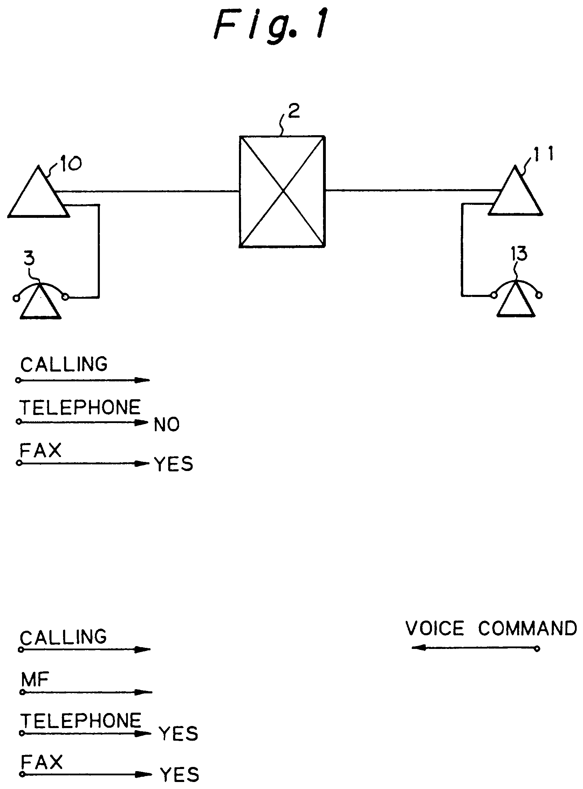

Figure 1 shows the arrangement of a conventional facsimile device. Facsimile devices 1 and 11 are connected together through an exchange 2. Telephone sets 3 and 13 are connected respectively to each facsimile device 10 and 11. The prior art facsimile devices in Fig. 1 are connected to each other through a single telephone line, and although facsimile communication is possible, voice communication is not. That is to say, if the called party's facsimile automatic reception, if a person calls, he could not be able to establish voice communication. It is necessary to provide a pair of telephone lines which are connected to both the telephone set and to the facsimile devices, in order to allow talking over the telephones.

In view of the above, it is desired to provide a facsimile device which does not require any manual operation for reception, which can switch automatically between a facsimile mode and a normal telephone mode based on the presence or absence of a calling discriminating signal from a calling side, and which requires only a single telephone line.

Further there is a need for a facsimile/telephone changeover system which can automatically switch between a facsimile mode and a telephone mode by providing a command response time control function, a signal identification function, a voice recording/reproducing function, and a line monitoring function.

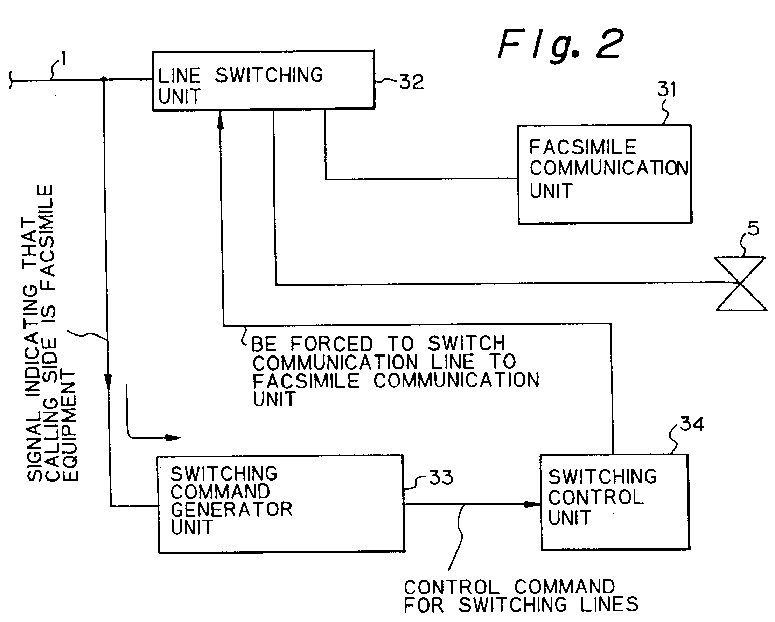

Fig. 2 is a block diagram of the constitution of the device according to the present invention.

Reference number 1 denotes a communication line 1, 5 a telephone set, 31 a facsimile communication unit, 32 a line switching unit, 33 a switching command generation unit, and 34 a switching control unit.

In Fig. 2, facsimile communication is effected through a communication line 1 by a facsimile communication unit 31.

A line switching operation is carried out in a line switching unit 32. Connecting the communication line 1 to either the facsimile communication unit 31 or an externally connected telephone set 5.

When a signal indicating that a calling side directed to the facsimile equipment is received through the communication line 1 to a switching command generation unit 33, a control command for switching lines is sent from the switching command generation unit 33 to a switching control unit 34.

When the control command for switching the lines is sent to the switching control unit 34, the line switching unit 32 connects the communication line 1 to the facsimile communication unit 31.

According to the present invention, when a call of facsimile mode incomes, since the communication line 1 is forcedly switched to the facsimile communication unit 31 side, a facsimile receiving operation is commenced automatically even if the telephone set 5 is off-hook.

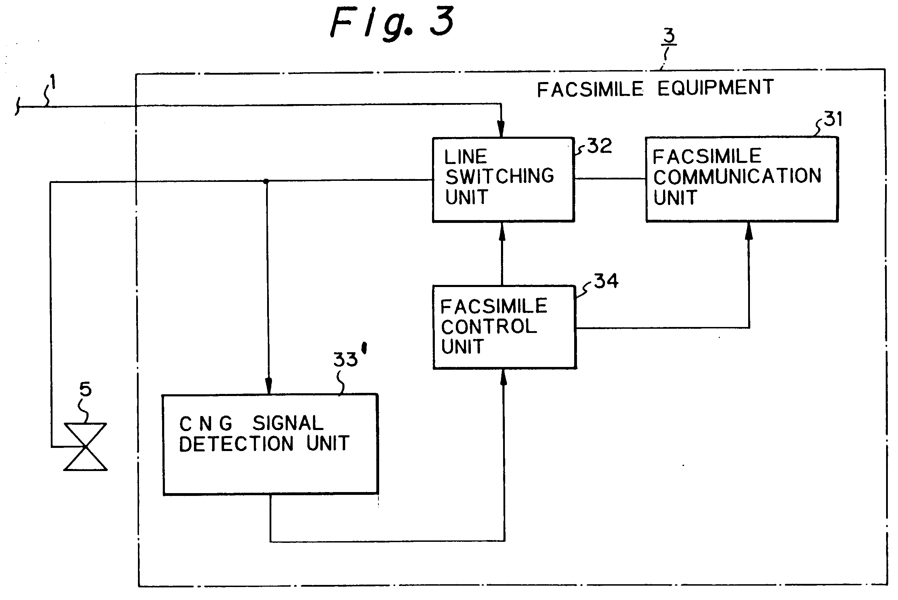

Fig. 3 is a block diagram showing an embodiment in accordance with the present invention. In Fig. 3, a communication line 1 is connected to a facsimile device 3, and a telephone set 5 is connected to the facsimile device 3.

The facsimile device 3 is utilized in a manual receiving mode and the telephone set 5 is arranged on a desk apart from the facsimile device 3.

Facsimile communication by the facsimile device 3 is effected in the facsimile communication unit 31, and the facsimile control unit 34 controls the facsimile communication unit 31.

The facsimile communication unit 31 and the telephone set 5 are connected to the communication line 1 through the line switching unit 32, and the communication line 1 is switched and connected to either the facsimile communication unit 31 or the telephone set 5 by means of the line switching unit 32.

A CNG signal detection unit 33' is connected to the line switching unit 32 in parallel with the telephone set 5 and can detect a CNG signal delivered from an originating side (or dial tone side), through the line switching unit 32. In this case, the facsimile equipment 3 can discriminate that the originating side is a facsimile device.

A detected signal output from the CNG detection unit 33 is sent, as a control command, for switching lines, to the facsimile control unit 34, where the line switching unit 32 is switched and controlled, based on the detected signal from the CNG detection unit 33'.

As a result, the communication line 1 is forced to be connected to the facsimile communication unit 31 and a facsimile receiving operation is started at the facsimile communication unit 31.

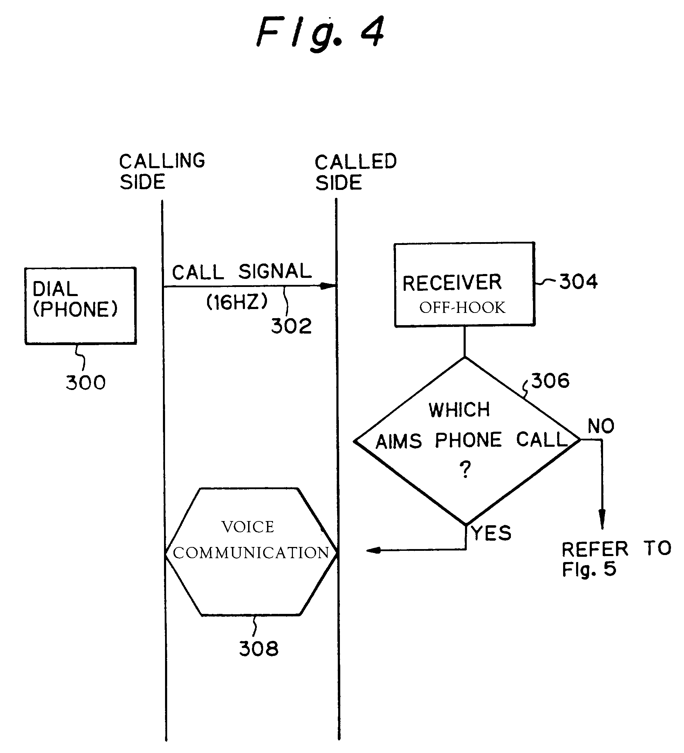

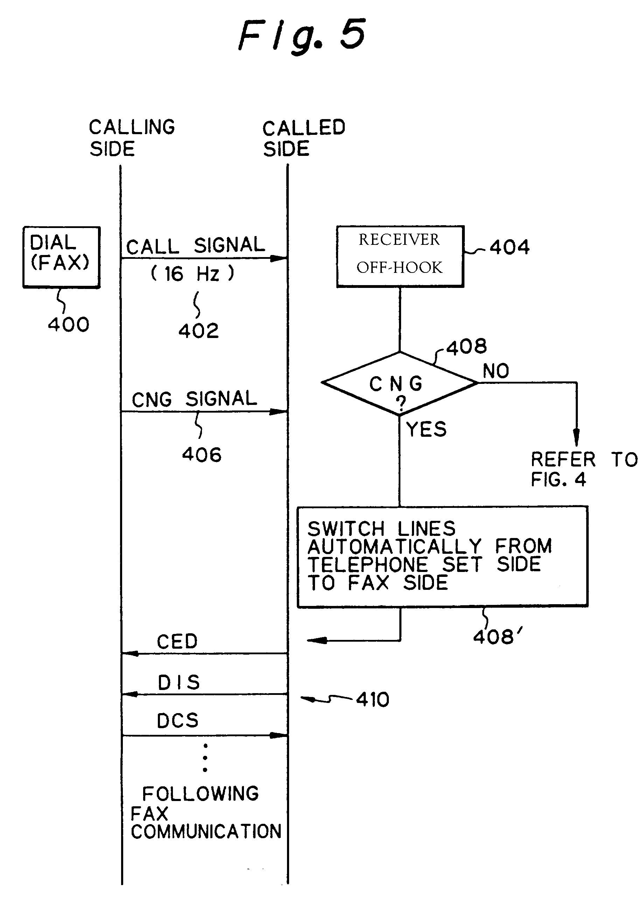

Fig. 4 is a flow chart for explaining the function of an embodiment of the present invention during call waiting or when a call terminates.

When dialing step 300 is effected at the originating side, a call signal or a ringing of 16 Hz is produced (Step 302) and in response to the ringing of the telephone set 5, a receiver of the telephone set 5 is lifted off-hook (Step 304).

Meanwhile, a CNG signal is not detected by the CNG detection unit 33', and since a switching control of the line switching unit 32 is not carried out at the facsimile control unit 34 (Step 306, YES), a voice communication is with no further change (Step 308).

Fig. 5 is a flow chart for explaining the function of an embodiment of the present invention in a facsimile communication when a signal from a facsimile device terminates.

A calling signal of 16 Hz is transmitted (Step 402) by means of dialing (Step 400) from the calling side facsimile device.

After ringing of the telephone set 5, the telephone receiver of the telephone set 5 is lifted off-hook (Step 404).

Then, since a CNG signal is transmitted form the facsimile equipment at the calling side (Step 406), the CNG signal is detected by the CNG detection unit 33' (at Step 408, YES).

When a CNG signal is detected by the CNG detection unit 33, it is sent to the facsimile control unit 34, the line switching unit 32 is controlled by the facsimile control unit 34, and the communication line 1 is forced to be switched from the telephone set 5 to the facsimile communication unit 31 (Step 408) by the line switching unit 32.

Thereafter, a CED signal, a DIS signal, a DCS signal, and so on are exchanged between the facsimile communication unit 31 and the facsimile device at the calling side (Step 410), and a document transmitted by the calling side is received by the facsimile communication unit 31.

As described above, even if a telephone receiver is off-hook, since a facsimile receiving operation is automatically started in response to the reception of a CNG signal, it is unnecessary to manually start a facsimile reception. Therefore, the operation of the facsimile device (3) is greatly simplified, and it is possible to enhance the reliability of facsimile reception.

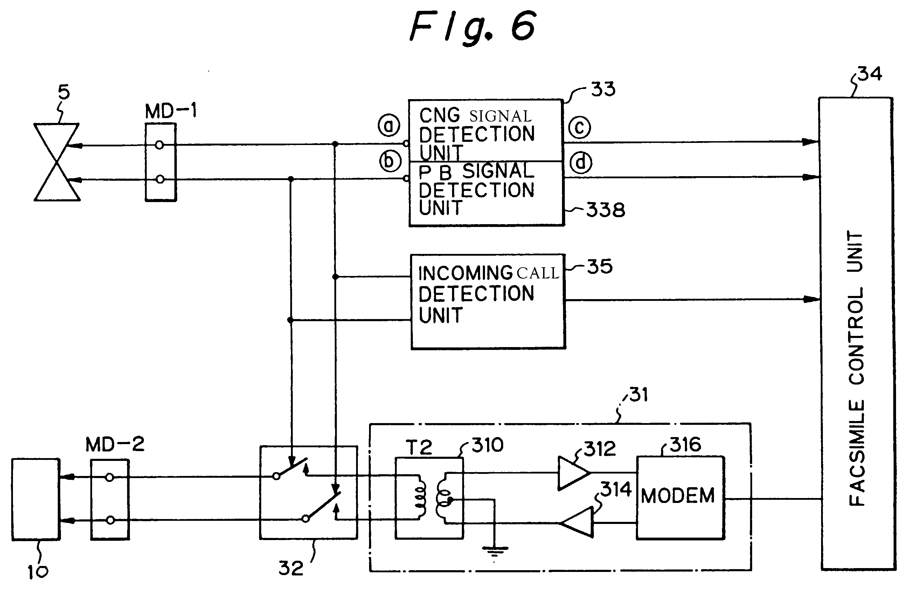

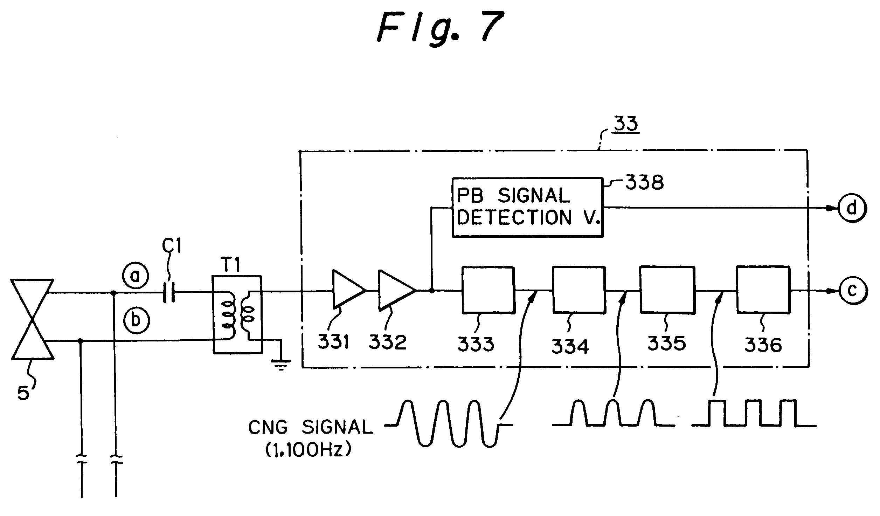

Further, a practical operation of an embodiment in accordance with the present invention will be described with reference to Figs. 6 and 7.

Three cases of a practical operation of an embodiment are as follows.

First, when a telephone set is answering in a manual reception mode.

When a 16 Hz-call incomes, a bell of a telephone set 5 rings. By lifting hook-off a receiver, a holding tone is sent to form a D.C. loop and open a telephone transmission circuit from a communication line. When a transmitting side of a facsimile device is in an automatic transmission mode, a CNG signal is sent from the transmitting side of the facsimile device.

The CNG signal is transmitted to a CNG detection unit 33 through a transformer T1 in Fig. 7. Then, an output is sent to a frequency counter 336 through an impedance converter 331, an amplifier 332 a low pass filter 333, a half-wave rectifier circuit 334, and binary logic circuit 335. The output waveshapes of the low pass filter 333, the half-wave rectifier circuit 334 and the binary logic circuit 335 are shown in Fig. 7. Accordingly, the CNG signal is detected to be 1100 Hz and sent to a facsimile control unit 34, where an output of the frequency counter 336 is monitored to effect a CNG signal detection. If the output is determined to be a CNG signal, line holding relays of a line switching unit 32 are activated and lines are switched to the facsimile side. Then, a communication with the transmitting side of the facsimile device is commenced.

Second, when an automatic answering telephone set is answering in a manual reception mode.

When a 16-Hz call incomes, a bell of the automatic answering telephone set (AATS) 5 rings. Receiving a command signal from a call incoming detection unit built in the AATS, a desired line is picked up by the AATS to effect a D.C. holding action to close a D.C. loop. As is the same with the above first case, a CNG signal is sent from the transmitting side, then transmitted to the CNG signal detection unit 33 through a transformer T1. If the output of the frequency counter 336 is determined to be a CNG signal, line holding relays of the line switching unit 32 are activated and the lines are switched to the facsimile side. Then a communication with the transmitting side of the facsimile device is commenced. The line of the AATS is switched to the facsimile side and the line is opened to stop the activation.

Third, when a telephone set is answering in a manual reception mode, and a dial in the other party side of the facsimile device is set to be in a manual call-originating state.

When a 16-Hz call incomes, a bell of the telephone set 5 rings. By lifting hook-off the receiver, a holding tone is sent to form a D.C. loop and to open the telephone transmission circuit.

The device is able to consecrate with a sender of a transmitting side of the facsimile device and a predetermined PB signal is sent to the receiving side of the facsimile device by means of a push-button dial telephone set (or a push-phone) connected to the receiving side of the facsimile device. Then a dial tone connection for receiving the facsimile device is effected to switch the line from the telephone set side to the facsimile device side.

A CED signal of 2100 Hz is returned by a loop from the receiving side of the facsimile device. Then, a start button dial of a transmitting side of the facsimile device is pushed down to commence a communication.

Figure 6 illustrates an example of the facsimile communication unit 31. This unit includes a line transformer 310 coupled to the line switching unit 32. The transformer 310 is coupled to a pair of amplifiers 312,314 which in turn are connected to a modem 316. The modem 316 is connected to the facsimile control unit 34.

## Claims

1. A facsimile device for coupling to a communication line (1) and a telephone set (5), said facsimile device comprising:
facsimile communication means (31) for effecting facsimile communication through the communication line;
characterised by line switching means (32) for selecting between a facsimile communication mode and a manual reception telephone mode and for switching connection of the communication line (1) in the facsimile communication mode to said facsimile communication means (31) and in the manual reception telephone mode to the telephone set (5) connected externally to said line switching means;
switching command generator means (33) for generating a control command for switching said line switching means (32) to the facsimile communication mode from the manual reception telephone mode when a signal indicating that a call is directed to said facsimile communication means (31) is received from the communication line (2); and
switching control means (34) for controlling said line switching means (32) when the control command is issued to connect the communication line (1) to said facsimile communication means (31), both facsimile communication and telephone communication being effected on the communication line by switching between the facsimile communication mode and the manual reception telephone mode.

2. A facsimile device according to claim 1, for connection via a communication line to a calling device generating the signal received by the communication line, including a CNG signal; and
wherein said switching command generator means (33) comprises a calling tone signal detection unit, coupled to said line switching means (32) and said switching control means (34), to identify that the calling device is another facsimile device based on the CNG signal.

3. A facsimile device according to claim 2,
wherein said switching control means (34) comprises a facsimile control unit coupled to said facsimile communication means (31), said line switching means (32) and said calling tone signal detection unit (33); and
wherein said calling tone signal detection unit sends the CNG signal as the control command to effect switching of said line switching means.

4. A facsimile device according to any of the preceding claims, wherein said facsimile device (31) is operable in at least one of a manual receiving mode, an automatic receiving mode and an automatic answering mode, and the signal indicating that the call is directed to said facsimile communication means is used in the automatic receiving mode and is not used in the manual receiving mode.

5. A facsimile device according to claim 1, wherein said switching command generator means includes:
a push button signal detection unit (338) coupled to the communication line and said switching control means; and
a calling tone detection unit (33), coupled to said line switching means (32), said switching control means (34) and said push button signal detection unit (338), the calling tone detection unit including:
an impedance converter (331) coupled to said line switching means;
an amplifier (332) coupled to the impedance converter;
a low pass filter (333) coupled to the amplifier;
a half-wave rectifier circuit (334) coupled to the low pass filter;
a binary logic circuit (335) coupled to the rectifier circuit; and
a frequency counter (336) coupled to the binary logic half-wave circuit and said switching control means.

6. A facsimile device according to claim 1, wherein said facsimile communication means includes:
a line transformer (310) coupled to said line switching means (32);
a pair of amplifiers (312,314) coupled to the line transformer (310); and
a modem (316), or a modulator and a demodulator device, coupled to said pair of amplifiers (312,314) and said switching control unit (34).

7. A facsimile device according to claim 1, wherein said facsimile device further comprises an incoming call detection unit (35) coupled to said line switching means and said switching control means.

8. A facsimile device according to any of the preceding claims connected to a communication line (1) and a telephone set (5).

9. A facsimile device according to claim 8, wherein the telephone set (5) is an automatic answering telephone set.

10. A facsimile device according to claim 9, wherein said automatic answering telephone set (5) is not connected to the facsimile communication means (31).

11. A facsimile device according to any one of claims 8 to 10, wherein the facsimile device and the telephone set (5) associated with said facsimile device are utilized as a party line telephone with the same telephone number.

12. A method for switching between a manual telephone communication mode and a facsimile communication mode, effecting facsimile communication of the communication mode by facsimile means (31) characterised by the steps of:
(a) switching a switching unit (32) to couple a communication line (1) to a telephone set and a signal detection unit in the manual telephone communication mode; and
(b) detecting a signal received from said communication line via said switching unit, indicating a facsimile communication mode, using the signal detection unit;
(c) switching the switching unit to decouple the telephone set and the signal detection unit from the communication line and to couple the facsimile device to the communication line in the facsimile communication mode, based on said step (b), regardless of whether the telephone set is in an off-hook state.

13. A method as claimed in claim 12, wherein the signal is a calling tone signal.

14. A method as claimed in claim 12, wherein the signal is a push button signal.

## Patentansprüche

1. Eine Faksimilevorrichtung zum Koppeln mit einer Kommunikationsleitung (1) und einem Telefonapparat (5), welche Faksimilevorrichtung umfaßt:
ein Faksimilekommunikationsmittel (31) zum Ausführen einer Faksimilekommunikation durch die Kommunikationsleitung;
gekennzeichnet durch ein Leitungsschaltmittel (32) zum Wählen zwischen einem Faksimilekommunikationsmodus und einem Fernsprechmodus mit manuellem Empfang und zum Schalten der Verbindung der Kommunikationsleitung (1) im Faksimilekommunikationsmodus auf das genannte Faksimilekommunikationsmittel (31) und im Fernsprechmodus mit manuellem Empfang auf den Telefonapparat (5), der mit dem genannten Leitungsschaltmittel extern verbunden ist;
ein Schaltbefehlgeneratormittel (33) zum Erzeugen eines Steuerbefehls zum Schalten des genannten Leitungsschaltmittels (32) von dem Fernsprechmodus mit manuellem Empfang auf den Faksimilekommunikationsmodus, wenn ein Signal von der Kommunikationsleitung (2) empfangen wird, das angibt, daß ein Ruf an das genannte Faksimilekommunikationsmittel (31) gerichtet ist; und
ein Schaltsteuermittel (34) zum Steuern des genannten Leitungsschaltmittels (32), wenn der Steuerbefehl ausgegeben ist, um die Kommunikationsleitung (1) mit dem genannten Faksimilekommunikationsmittel (31) zu verbinden, bei der sowohl Faksimilekommunikation als auch Fernsprechkommunikation auf der Kommunikationsleitung erfolgt, indem zwischen dem Faksimilekommunikationsmodus und dem Fernsprechmodus mit manuellem Empfang geschaltet wird.

2. Eine Faksimilevorrichtung nach Anspruch 1, zur Verbindung über eine Kommunikationsleitung mit einer rufenden Vorrichtung, die das Signal erzeugt, das durch die Kommunikationsleitung empfangen wird, welches ein CNG-Signal enthält; und
bei der das genannte Schaltbefehlgeneratormittel (33) eine Ruftonsignaldetektionseinheit umfaßt, die mit dem genannten Leitungsschaltmittel (32) und dem genannten Schaltsteuermittel (34) gekoppelt ist, um auf der Basis des CNG-Signals zu identifizieren, daß die rufende Vorrichtung eine andere Faksimilevorrichtung ist.

3. Eine Faksimilevorrichtung nach Anspruch 2, bei der das genannte Schaltsteuermittel (34) eine Faksimilesteuereinheit umfaßt, die mit dem genannten Faksimilekommunikationsmittel (31), dem genannten Leitungsschaltmittel (32) und der genannten Ruftonsignaldetektionseinheit (33) gekoppelt ist; und
bei der die genannte Ruftonsignaldetektionseinheit das CNG-Signal als Steuerbefehl sendet, um das Schalten des genannten Leitungsschaltmittels zu bewirken.

4. Eine Faksimilevorrichtung nach irgendeinem der vorhergehenden Ansprüche, bei der die genannte Faksimilevorrichtung (31) in wenigstens einem von einem manuellen Empfangsmodus, einem automatischen Empfangsmodus und einem automatischen Beantwortungsmodus betriebsfähig ist, und das Signal, das angibt, daß der Ruf an das genannte Faksimilekommunikationsmittel gerichtet ist, im automatischen Empfangsmodus verwendet wird und nicht im manuellen Empfangsmodus verwendet wird.

5. Eine Faksimilevorrichtung nach Anspruch 1, bei der das genannte Schaltbefehlgeneratormittel enthält:
eine Drucktastensignaldetektionseinheit (338), die mit der Kommunikationsleitung und dem genannten Schaltsteuermittel gekoppelt ist; und
eine Ruftondetektionseinheit (33), die mit dem genannten Leitungsschaltmittel (32), dem genannten Schaltsteuermittel (34) und der genannten Drucktastensignaldetektionseinheit (338) gekoppelt ist, welche Ruftondetektionseinheit enthält:
einen Impedanzwandler (331), der mit dem genannten Leitungsschaltmittel gekoppelt ist;
einen Verstärker (332), der mit dem Impedanzwandler gekoppelt ist;
ein Tiefpaßfilter (333), das mit dem Verstärker gekoppelt ist;
eine Einweggleichrichterschaltung (334), die mit dem Tiefpaßfilter gekoppelt ist;
eine Binärlogikschaltung (335), die mit der Einweggleichrichterschaltung gekoppelt ist; und
einen Frequenzzähler (336), der mit der Binärlogikschaltung und dem genannten Schaltsteuermittel gekoppelt ist.

6. Eine Faksimilevorrichtung nach Anspruch 1, bei der das genannte Faksimilekommunikationsmittel enthält:
einen Leitungstransformator (310), der mit dem genannten Leitungsschaltmittel (32) gekoppelt ist;
ein Paar von Verstärkern (312, 314), die mit dem Leitungstransformator (310) gekoppelt sind; und
ein Modem (316), oder eine Modulator- und eine Demodulatorvorrichtung, das mit dem genannten Paar von Verstärkern (312, 314) und der genannten Schaltsteuereinheit (34) gekoppelt ist.

7. Eine Faksimilevorrichtung nach Anspruch 1, bei der die genannte Faksimilevorrichtung ferner eine Detektionseinheit (35) eines ankommenden Rufes umfaßt, die mit dem genannten Leitungsschaltmittel und dem genannten Schaltsteuermittel gekoppelt ist.

8. Eine Faksimilevorrichtung nach irgendeinem der vorhergehenden Ansprüche, die mit einer Kommunikationsleitung (1) und einem Telefonapparat (5) verbunden ist.

9. Eine Faksimilevorrichtung nach Anspruch 8, bei der der Telefonapparat (5) ein Telefonapparat mit automatischer Beantwortung ist.

10. Eine Faksimilevorrichtung nach Anspruch 9, bei der der genannte Telefonapparat mit automatischer Beantwortung (5) nicht mit dem Faksimilekommunikationsmittel (31) verbunden ist.

11. Eine Faksimilevorrichtung nach irgendeinem der Ansprüche 8 bis 10, bei der die Faksimilevorrichtung und der Telefonapparat (5), der der genannten Faksimilevorrichtung zugeordnet ist, als Gemeinschaftsleitungstelefon mit derselben Rufnummer genutzt werden.

12. Ein Verfahren zum Schalten zwischen einem manuellen Fernsprechkommunikationsmodus und einem Faksimilekommunikationsmodus, der eine Faksimilekommunikation des Kommunikationsmodus durch das Faksimilemittel (31) bewirkt, gekennzeichnet durch die folgenden Schritte:
(a) Schalten einer Schalteinheit (32), um im manuellen Fernsprechkommunikationsmodus eine Kommunikationsleitung (1) mit einem Telefonapparat und einer Signaldetektionseinheit zu koppeln; und
(b) Detektieren eines Signals, das von der genannten Kommunikationsleitung über die genannte Schalteinheit empfangen wird und einen Faksimilekommunikationsmodus angibt, unter Verwendung der Signaldetektionseinheit;
(c) Schalten der Schalteinheit, um auf der Basis des genannten Schrittes (b) den Telefonapparat und die Signaldetektionseinheit von der Kommunikationsleitung zu entkoppeln und die Faksimilevorrichtung im Faksimilekommunikationsmodus mit der Kommunikationsleitung zu koppeln, ungeachtet dessen, ob der Telefonapparat im abgehobenen Zustand ist.

13. Ein Verfahren nach Anspruch 12, bei dem das Signal ein Ruftonsignal ist.

14. Ein Verfahren nach Anspruch 12, bei dem das Signal ein Drucktastensignal ist.

## Revendications

1. Appareil de télécopie pour couplage entre une ligne de communication (1) et un poste téléphonique (5), ledit appareil de télécopie comprenant:
un moyen de communication par télécopie (31) pour réaliser une communication par télécopie par l'intermédiaire de la ligne de communication;
caractérisé par un moyen de commutation de ligne (32), pour sélectionner entre un mode de communication par télécopie et un mode de réception téléphonique manuelle, et pour commuter la connexion de la ligne de communication (1) sur ledit moyen de communication par télécopie (31), en mode de communication par télécopie, et sur le poste téléphonique (5) connecté par l'extérieur audit moyen de commutation de ligne, en mode de réception téléphonique manuelle;
un moyen de création de commandes de commutation (33), pour créer une commande de contrôle pour commuter ledit moyen de commutation de ligne (32) du mode de réception téléphonique manuelle en mode de communication par télécopie lorsqu'un signal indiquant qu'un appel est dirigé vers ledit moyen de communication par télécopie (31) est reçu en provenance de la ligne de communication (2); et
un moyen de contrôle de commutation (34), pour contrôler ledit moyen de commutation de ligne (32) lorsque la commande de contrôle est émise pour connecter la ligne de communication (1) sur ledit moyen de communication par télécopie (31), la communication par télécopie et la communication téléphonique étant toutes deux réalisées sur la ligne de communication, par commutation entre le mode de communication par télécopie et le mode de réception téléphonique manuelle.

2. Appareil de télécopie selon la revendication 1, pour la connexion, par l'intermédiaire d'une ligne de communication, sur un dispositif d'appel créant le signal reçu par la ligne de communication, comprenant un signal CNG; et
dans lequel ledit moyen de création de commandes de commutation (33) comprend une unité de détection de signal de tonalité d'appel, couplée audit moyen de commutation de ligne (32) et audit moyen de contrôle de commutation (34), afin d'identifier, sur base du signal CNG, que le dispositif d'appel est un autre appareil de télécopie.

3. Appareil de télécopie selon la revendication 2, dans lequel ledit moyen de contrôle de commutation (34) comprend une unité de contrôle de télécopie couplée audit moyen de communication par télécopie (31), audit moyen de commutation de ligne (32) et à ladite unité de détection de signal de tonalité d'appel (33); et
dans lequel ladite unité de détection de signal de tonalité d'appel envoie le signal CNG comme commande de contrôle pour effectuer la commutation dudit moyen de commutation de ligne.

4. Appareil de télécopie selon l'une quelconque des revendications précédentes, dans lequel ledit appareil de télécopie (31) peut fonctionner en au moins un mode choisi parmi un mode de réception manuelle, un mode de réception automatique et un mode de réponse automatique, et le signal indiquant que l'appel est dirigé sur ledit moyen de communication par télécopie est utilisé en mode de réception automatique et n'est pas utilisé en mode de réception manuelle.

5. Appareil de télécopie selon la revendication 1, dans lequel ledit moyen de création de commandes de commutation comprend:
une unité de détection de signal à bouton-poussoir (338), couplée à la ligne de communication et audit moyen de contrôle de commutation; et
une unité de détection de tonalité d'appel (33), couplée audit moyen de commutation de ligne (32), audit moyen de contrôle de commutation (34) et à ladite unité de détection de signal à bouton-poussoir (338), l'unité de détection de tonalité d'appel incluant:
un convertisseur d'impédance (331) couplé audit moyen de commutation de ligne;
un amplificateur (332) couplé au convertisseur d'impédance;
un filtre passe-bas (333) couplé à l'amplificateur;
un circuit redresseur à demi-onde (334) couplé au filtre passe-bas;
un circuit logique binaire (335) couplé au circuit redresseur; et
un compteur de fréquence (336) couplé au circuit logique binaire à demi-onde et audit moyen de contrôle de commutation.

6. Appareil de télécopie selon la revendication 1, dans lequel ledit moyen de communication par télécopie comprend:
un transformateur de ligne (310) couplé audit moyen de commutation de ligne (32);
une paire d'amplificateurs (312, 314) couplés au transformateur de ligne (310); et
un modem (316), ou un dispositif modulateur et démodulateur, couplé à ladite paire d'amplificateurs (312, 314) et à ladite unité de contrôle de commutation (34).

7. Appareil de télécopie selon la revendication 1, dans lequel ledit appareil de télécopie comprend en outre une unité de détection d'appel entrant (35), couplée audit moyen de commutation de ligne et audit moyen de contrôle de commutation.

8. Appareil de télécopie selon l'une quelconque des revendications précédentes, connecté à une ligne de communication (1) et à un poste téléphonique (5).

9. Appareil de télécopie selon la revendication 8, dans lequel le poste téléphonique (5) est un poste téléphonique à répondeur automatique.

10. Appareil de télécopie selon la revendication 9, dans lequel ledit poste téléphonique à répondeur automatique (5) n'est pas connecté au moyen de communication par télécopie (31).

11. Appareil de télécopie selon l'une quelconque des revendications 8 à 10, dans lequel l'appareil de télécopie et le poste téléphonique (5) associé audit appareil de télécopie sont utilisés comme téléphone de ligne d'abonné avec le même numéro de téléphone.

12. Procédé pour commuter entre un mode de communication téléphonique manuelle et un mode de communication par télécopie, en réalisant dans le mode de communication une communication par télécopie par l'intermédiaire d'un moyen de télécopie (31), caractérisé par les étapes consistant à:
(a) commuter une unité de commutation (32) pour coupler une ligne de communication (1) à un poste téléphonique et à une unité de détection de signal en mode de communication téléphonique manuelle; et
(b) détecter un signal reçu provenant de ladite ligne de communication par l'intermédiaire de ladite unité de commutation, indiquant un mode de communication par télécopie, en utilisant l'unité de détection de signal;
(c) commuter l'unité de commutation pour découpler de la ligne de communication le poste téléphonique et l'unité de détection de signal et pour coupler l'appareil de télécopie à la ligne de communication en mode de communication par télécopie, sur base de ladite étape (b), même si le poste téléphonique est décroché.

13. Procédé selon la revendication 12, dans lequel le signal est un signal de tonalité d'appel.

14. Procédé selon la revendication 12, dans lequel le signal est un signal de bouton-poussoir.
